(19) Europäisches Patentamt
European Patent Office
Office européen des brevets

(11) **EP 3 659 757 A1**

(12) **EUROPEAN PATENT APPLICATION**

(43) Date of publication:
**03.06.2020 Bulletin 2020/23**

(51) Int Cl.:
***B25J 9/16*** *(2006.01)*

(21) Application number: **18209481.3**

(22) Date of filing: **30.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Schmitt, Philipp Sebastian
  81735 München (DE)**
• **Neubauer, Werner
  81739 München (DE)**
• **Wirnshofer, Florian
  80335 München (DE)**

(54) **METHOD FOR DETERMINING A CONTROLLER SEQUENCE**

(57)   The present invention relates to a method for determining a controller sequence, comprising the steps of providing a plurality of states with at least one initial state and at least one target state, wherein each state comprises a mode, wherein the mode is a contact-state between at least two elements of a system and is associated with at least one constraint, determining a respective constraint-based controller for each state of the plurality of states based on the associated mode using manipulation planning, wherein the determined plurality of constraint-based controllers is arranged as sequence of constraint-based controllers, configured to steer the system from the initial state to the target state.

## FIG 4

S1

S2

EP 3 659 757 A1

**Description**

1. Technical field

The present invention relates to a computer-implemented method for determining a controller sequence. Further, the invention relates to a corresponding computer program product and technical system.

2. The prior art

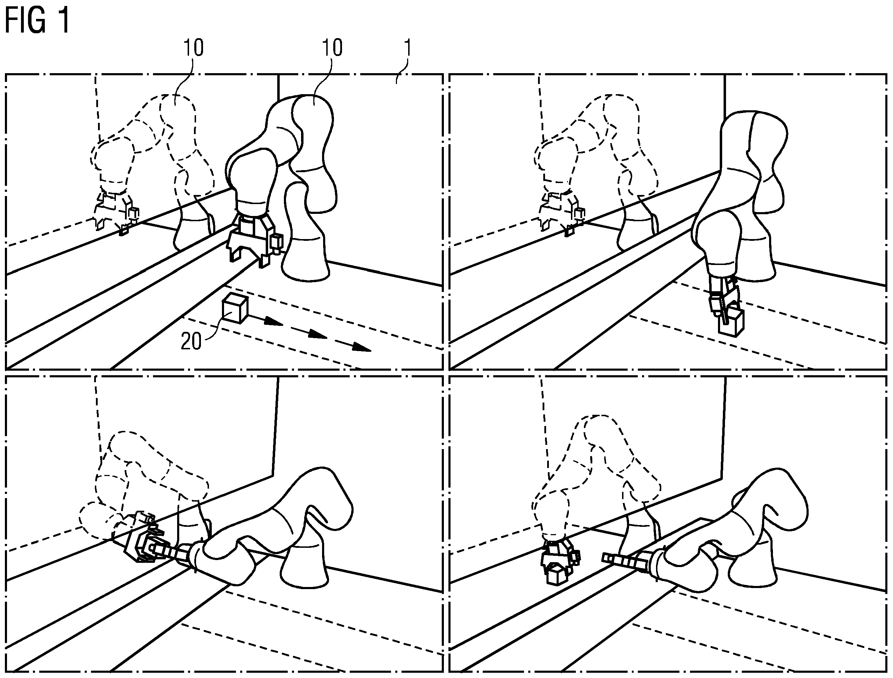

According to prior art, usually an industrial robot's work-flow consists of a set of tasks which are repeated multiple times. Figure 1 illustrates an exemplary task of two robot units 10. The task of the robot units 10 is to transport a cube 20 through an opening in a wall. The cube has to be placed on the left side of the wall. Thus, the right robot unit 10 must grasp the cube 20 and hand it to the left robot unit 10 through the opening in order to achieve this goal.
Many automation tasks require the robot units 10 to manipulate objects, such as the cube 20. Accordingly, the robot units 10 can be equally referred to as robots or manipulators in the following. Applications range from industrial assembly to logistics. When tasks or environments change frequently, programming robot motions manually is not viable. It is desirable that the robot units generate the necessary motions autonomously.
Several aspects of manipulation render this a challenging problem:

1) Variety of tasks:

Consider picking an object from a
moving conveyor belt or manipulating a single large object with two robot units. These two tasks put constraints on the motion generation that go beyond collision-free motion planning. To address this variety of tasks it is necessary to employ models that have the expressiveness to capture the constraints of different applications.

2) Dynamic and uncertain environments:

Estimates of a robot unit's environment are inherently noisy. Thus, planning motions and executing them open-loop is likely to fail eventually. For this reason, manipulation benefits from instantaneous reactions to measurements such as object poses or detected obstacles.

3) Sequential interdependence of motions and actions:

Subtle geometric and kinematic differences in manipulation tasks can require entirely different sequences of robot motions, grasps and placements. Referring to Figure 1,
the left robot could directly reach for the
cube if the opening was wider.
Known approaches in this respect are constraint-based task specification and control as well as manipulation planning. However, these approaches just address single aspects. Further, the output of the known planners is a trajectory which is not suitable for a responsive and controlled performance of the robot unit. Thus, the robot unit is not capable to react to unforeseen disturbances or obstacles.
It is therefore an objective of the invention to provide a method for determining a controller sequence in an efficient and reliable manner.

3. Summary of the invention

This problem is according to one aspect of the invention solved by a method for determining a controller sequence, comprising the steps of:

    a. Providing a plurality of states with at least one initial state and at least one target state, wherein

    b. each state comprises a mode, wherein the mode is a contact-state between at least two elements of a system and is associated with at least one constraint, and

    c. determining a respective constraint-based controller for each state of the plurality of states based on the associated mode using manipulation planning, wherein

    d. the determined plurality of constraint-based controllers is arranged as sequence of constraint-based controllers, configured to steer the system from the initial state to the target state.

Accordingly, the method is directed to a method for determining a controller sequence. The controller sequence is a set or plurality of controllers steering the system for an initial state or start state to a goal or target state. Thereby, the sate is a state of a system, such as the exemplary system according to Figure 1. This system has two grippers as robot units, a conveyor and a cube. The grippers can e.g. grasp and move the cube.

The state comprises a mode. Thereby, the mode is a contact-state between two elements of the system. For example, the cube can be in contact with the conveyor or the grippers. The contact-state is assigned to one or more constraints. An exemplary constraint is a distance range or limit. For example, the cube has to maintain a predefined distance to another element. The constraints have to be met while the system is within that mode. The mode can transition to another mode.

Thus, the modes can form a graph, such as a dynamic constraint-graph. Thus, the graph comprises the modes as nodes and the transitions between the modes as edges.

A respective constraint-based controller is determined for each state of the plurality of states based on the associated mode using manipulation planning. The determined plurality of constraint-based controllers is arranged as sequence of constraint-based controllers, configured to steer the system from the initial state to the target state.

Thus, the constraint-based controllers are used as steering functions in a kinodynamic manipulation planner. The planner can transform the dynamic constraint-graph into task specifications for constraint-based controllers.

The advantage of the present invention lies in the fact that a sequence of constraint-based controllers is derived from the underlying domain model. In contrast to the prior art, a trajectory is not computed. This allows the robot units to react on-line to measurements of object poses or obstacles while executing a plan. As the task specification for the controllers is derived from the planning domain model, safety requirements such as self-collision-avoidance and axis-limits are satisfied during reactive execution.

In one aspect, the at least one constraint is an element selected from the group comprising an axis limit, collision avoidance, velocity limit and distance limit. Accordingly, a variety of constraints or requirements can be selected and predefined to be met by the system according to user preferences or the underlying system.

In a further aspect, the state further comprises an additional input element selected from the group comprising a configuration, a time derivative and time. Accordingly, the state can be extended by additional input data. The configuration and its time derivative encode the continuous state of the system. Referring to the above exemplary system, the configuration can be denoted as a vector comprising the 14 axis-positions as well as a vector-quaternion representation of the pose of the cube. The state as input data set comprising the mode as well as all additional input elements can be referred to as full state of the system.

In a further aspect, step c. considers one or more additional input elements, at least one previously determined controller and/or another state. Accordingly, distinct input data can be considered in step c. for manipulation planning, such as the mode only. Additionally, the listed additional input elements can be used as input, for example the full state of the system.

In a further aspect, the constraint-based controller is random-based or transition-based. Accordingly, the manipulation planner can use two types of constraint-based controllers as steering functions. The random-based controller uses the mode as input and returns a controller that steers towards a randomly chosen robot configuration on a trajectory that satisfies the constraints of the mode. The transition-based controller takes two modes as input and returns a controller that steers towards the intersection of both mode's constraint-manifolds while satisfying the constraints of the first mode. The random-based controller can be equally referred to as random controller and the transition-based controller as transition controller. In other words, the simulation simulates one controller, either the random-based controller or the transition-based controller.

The according exemplary pseudocode could be noted as follows:

```
target = randomConfiguration()
controller = Controller (current_mode, target)
result = simulate(controller, current_state)
controller = Controller(current_mode, next_mode)
result = simulate(controller, current_state)
```

A further aspect of the invention is a computer program product directly loadable into an internal memory of a computer, comprising software code portions for performing the steps according to any one of the preceding claims when said computer program product is running on a computer.

A further aspect of the invention is a technical system for performing the described method.

4. Short description of the drawings

In the following detailed description, presently preferred embodiments of the invention are further described with reference to the following figures:

Fig. 1     illustrates an exemplary system according to an embodiment of the invention.

Fig. 2     illustrates a domain model according to an embodiment of the invention.

Fig. 3     illustrates a determined controller sequence according to an embodiment of the invention.

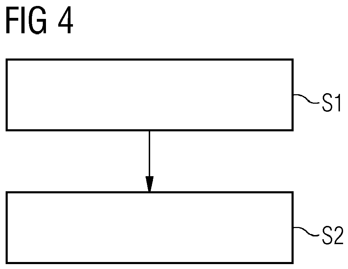

Fig. 4     illustrates a flowchart of the method according to the invention.

5. Detailed description of preferred embodiments

Dynamic constraint graph

The domain model is a model which extends a constraint-graph to incorporate second-order dynamics and time-variance.

A configuration $q \in \mathbb{R}^n$ and its time derivative $\dot{q}$ encode the continuous state of a, such as the system 1 according to Figure 1. In the dual arm example, this vector q comprises 14 axis-positions as well as a vector-quaternion representation of the pose of a cube. Time is represented by t. Further, the configuration can comprise the acceleration.
A discrete mode $\sigma \in \Sigma$ encodes the contact-state of the system 1 and is an element of the finite set of modes $\Sigma$. According to Figure 1, the cube may either be at rest on a surface, moved by a conveyor or held by one of two grippers. The cube has six sides that may be in contact with surface, conveyor or grippers resulting in $|\Sigma| = 24$ discrete modes. The discrete mode determines both the system dynamics and the constraints that a configuration q must fulfill. The surface, conveyor, gripper and cube are elements 10, 20 of the system 1.
The system 1 has the control input $u_{min} \le u \le u_{max}$, as 14 axis-accelerations. Given a mode $\sigma$, the system follows a control-affine, second-order dynamic:

$$\ddot{q} = a_\sigma(q, \dot{q}, t) + B_\sigma(q, \dot{q}, t)u, \qquad (1)$$

where $a_\sigma(\cdot)$ denotes the acceleration $\ddot{q}$ for zero control input and $B_\sigma(\cdot)$ denotes its affine dependency on u. In the example, the acceleration of the 14 axes is equal to u, independently of $\sigma$. The acceleration of the cube depends on the mode $\sigma$ and the configuration of the robot unit. In case
of a grasp, the acceleration of its pose is determined by the forward-kinematics of the grasping robot. When the cube is placed on a surface its acceleration is zero. If an object is placed on a conveyor belt, equation (1) is time dependent. Each mode $\sigma$ is associated with a set of (twice differentiable)
constraints $f_\sigma$ and $g_\sigma$, that must hold while the system 1 is in that mode or to transition into that mode:

$$f_\sigma(q, t) = 0, \qquad g_\sigma(q, t) \le 0. \qquad (2)$$

The inequality constraints $g_\sigma$ comprise axis limits as well as collision avoidance. The geometry of the robot units and cube is approximated by convex primitives and their pairwise penetration depth must remain negative. Equality constraints $f_\sigma$ arise due to the contact-state of the object. If the cube is placed, its center must be at a fixed height above the surface and its contacting side be antiparallel to the surface. This also implies that the pose of the cube is under-constrained: two translational axes and one rotational axis are free. Additionally, constraints may be imposed at the velocity level:

$$v_\sigma(q, \dot{q}, t) = 0, \qquad w_\sigma(q, \dot{q}, t) \le 0. \qquad (3)$$

Axis-velocity-limits are given as inequality constraints. The relative velocity of the cube to the surface or robot unit must be zero when placed or grasped respectively. While the system 1 is within mode $\sigma$ the constraints $f_\sigma$, $g_\sigma$, $v_\sigma$,

and $w_\sigma$ must be fulfilled. Thus, the modes $\sigma \in \Sigma$ form a graph. To transition from a mode $\sigma_1$ in this graph to mode $\sigma_2$ the second mode must be in the first mode's set of neighbors: $\sigma_2 \in N(\sigma_1)$. Additionally, the constraints $f_{\sigma2}$ and $g_{\sigma2}$ of $\sigma_2$ must be fulfilled. For example, to grasp a resting cube the gripper must be positioned in a grasping pose relative to the cube and all constraints on axis-limits and distances of collision bodies must be fulfilled. Switching a mode, i.e. opening or closing grippers in the example, is assumed to happen instantaneously and is an explicit decision of the robot and not part of the system dynamics.

The graph described by the set of modes $\Sigma$, the neighborhood-function $N(\cdot)$ and the corresponding constraints can be constructed automatically. Some of the constraints of (2) and (3) of the current mode are automatically fulfilled by the system dynamics (1). For example, while an object is grasped the constraints on the relative velocity of object and gripper are automatically fulfilled by the forward kinematics.

Let $s = (\sigma, q, \dot{q}, t)$ be the full state of the system. The goal for a planner is to find a finite sequence of controllers $\{\pi_i\}1 \le i \le k$ that steer the system from a start state $s_{start}$ to a goal region $S_{goal}$. The i-th controller computes the control input $u = \pi_i(s)$ based on the current state s. Furthermore, it may terminate and switch to the next controller $\pi_{i+1}$ or stop execution in case of the last controller. A controller that decides to switch the mode is always terminated. At all times the constraints of the current mode $\sigma$ and on mode-switching must be fulfilled. An important aspect of the domain model is that all restrictions on valid solutions are encoded in the constraint functions. No additional validity checks, typically used for collision checking, are part of the planning domain.

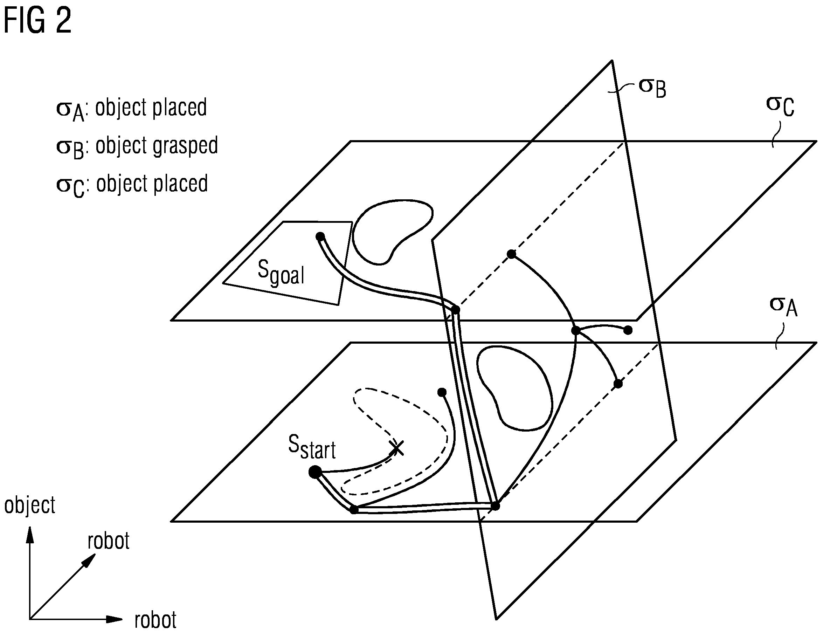

Figure 2 shows a domain model for a pick and place task and a corresponding valid motion throughout the dynamic constraint-graph. As the finite number of controllers $\pi_i$ in a plan is processed in a linear sequence, no chattering of the system can occur due to switching of modes.

The three planes according to Figure 2 depict the constraint-manifolds of different modes. White areas represent configurations that are in collision. Initially the object is placed in mode $\sigma_A$ and the object does not move when the robot moves. At the intersection of modes $\sigma_A$ and $\sigma_B$ the object can be grasped. When grasped in mode $\sigma_B$ the object is moved along with the robot unit. Within mode $\sigma_C$ the object is placed again in a different orientation. The thick line represents a trajectory for the robot unit and the object that leads from a start state $s_{start}$ to a goal region $S_{goal}$. The thin black lines show alternative motions attempted by the planner.

Manipulation planning

The proposed planner operates by transforming the dynamic constraint-graph into task specifications for constraint-based

controllers. These controllers can then be simulated during planning as steering functions. According to an embodiment, kinodynamic planner uses these steering functions to build a search tree.

Kinodynamic Manipulation Planner

The kinodynamic manipulation planner can use two types of controllers as steering functions, as mentioned further above.

The randomController$(\sigma) \rightarrow \pi$ returns a

controller $\pi$ that steers towards a randomly chosen robot configuration on a trajectory that satisfies the constraints of mode $\sigma$.

The transitionController $(\sigma, \sigma_{new}) \rightarrow \pi$ takes modes $\sigma$ and $\sigma_{new}$ as input and returns a controller $\pi$ that steers towards the intersection of both mode's constraint manifolds while satisfying the constraints of $\sigma$.

The simulateController $(s, \pi) \rightarrow s_{new}$ takes a state s and controller $\pi$ as input and returns the state $s_{new}$ to which the system is moved by the controller. Typically, there is zero probability of randomly steering into the intersection of the constraint-manifolds of two modes.

The kinodynamic manipulation planner can be described with the above controllers as steering functions. The exemplary algorithm is shown as pseudocode without termination condition in the following:

```
Procedure: buildSearchTree(s_start)
N <- {s_start}, E <- {}
while true do
```

```
s <- (σ, q, q̇, t) <- sampleWeighted(N)
π <- randomController(σ)
s_new <- simulateController(s, π)
N.add(s_new), E.add((s, π, s_new))
    for σ' ∈ N(σ) do
        π   <- transitionController(σ, σ')
        s_new <- simulateController(s, π)
        N.add(s_new), E.add((s, π, s_new))
```

Accordingly, the search-tree with nodes N and edges E can be built by the exemplary procedure, rooted in the initial state $s_{start}$.

The kinodynamic manipulation planner samples a random node from the current set of nodes N in each iteration using the command sampleWeighted. This command puts larger weight on nodes that lie in sparsely populated areas of the state-space. From this sampled node steers towards a random configuration, as well as to all neighboring modes. The kinodynamic planner does not have an infinite loop. Thus, the tree construction will be stopped, if a node within $S_{goal}$ is found or a time budget is depleted. Figure 2 shows the construction of the search tree. If a controller gets stuck locally, its result will be discarded after a simulated time-out. Figure 2 shows this path that ends in a cross.

Exemplary construction of TransitionController:

Under the assumption that the system is currently at a valid state s = $(\sigma, q, \dot{q}, t)$ and should transition to a mode $\sigma' \in N(\sigma)$, the control inputs u is determined that can lead to a state fulfilling the constraints $f_\sigma$' and $g_\sigma$' of mode $\sigma'$. Until these constraints are fulfilled the constraints $f_\sigma$ and $g_\sigma$ of the current mode $\sigma$ must not be violated. The control inputs u can be determined that obtain the following target dynamics of the constraint-functions:

$$\ddot{f}_\sigma = -K_p^{f_\sigma} f_\sigma - K_d^{f_\sigma} \dot{f}_\sigma,$$

$$\ddot{g}_\sigma \leq -K_p^{g_\sigma} g_\sigma - K_d^{g_\sigma} \dot{g}_\sigma,$$

$$\ddot{f}_{\sigma'} = -K_p^{f_{\sigma'}} f_{\sigma'} - K_d^{f_{\sigma'}} \dot{f}_{\sigma'}$$

$$\ddot{g}_{\sigma'} \leq -K_p^{g_{\sigma'}} g_{\sigma'} - K_d^{g_{\sigma'}} \dot{g}_{\sigma'}$$

with f, $\dot{f}$ and $\ddot{f}$ as the instantaneous value and time-derivatives of f based on the current q, $\dot{q}$, t and u. The diagonal gain matrices $K_*^*$ must be chosen to achieve stable and at least critically damped dynamics.

This ensures that the constraints of the current mode $\sigma$ are fulfilled since their constraint-functions are in the equilibrium state at zero or below zero for inequality constraints. Further, the constraints of the target mode $\sigma'$ can be fulfilled within a numerical tolerance.

The control inputs can be determined via a quadratic program, especially for manipulation tasks with collision avoidance:

```
minimize  xᵀHx
    x
subject to  L_A ≤ Ax ≤ U_A                                    (4)
            L ≤ x ≤ U.
```

The optimization variable $x = [u, \varepsilon_f, \varepsilon_g]^T$ comprises the control inputs u and slack variables $\varepsilon_f$ and $\varepsilon_{g'}$ for all non-safety constraints. As Hessian matrix H a diagonal matrix is used with weights for all control inputs and one for each non-safety constraint. L and U contain the limits on the control input $u_{min} \leq u \leq u_{max}$. The entries of the vectors $L_A$, $U_A$ and the matrix A are derived from the following equations:

$$\ddot{f}_{\sigma,0} + \frac{\partial \ddot{f}_\sigma}{\partial u} u = -K_p^{f_\sigma} f_\sigma - K_d^{f_\sigma} \dot{f}_\sigma,$$

$$\ddot{g}_{\sigma,0} + \frac{\partial \ddot{g}_\sigma}{\partial u} u = -K_p^{g_\sigma} g_\sigma - K_d^{g_\sigma} \dot{g}_\sigma,$$

$$\ddot{f}_{\sigma',0} + \frac{\partial \ddot{f}_{\sigma'}}{\partial u} u = -K_p^{f_{\sigma'}} f_{\sigma'} - K_d^{f_{\sigma'}} \dot{f}_{\sigma'} + \epsilon_{f'},$$

$$\ddot{g}_{\sigma',0} + \frac{\partial \ddot{g}_{\sigma'}}{\partial u} u \leq -K_p^{g_{\sigma'}} g_{\sigma'} - K_d^{g_{\sigma'}} \dot{g}_{\sigma'} \dotplus \epsilon_{g'},$$

where $\ddot{f}_0$ is the instantaneous, second-order time-derivative of f with u = 0.

Therefore, the target dynamics of $f_\sigma$' and $g_\sigma$' receive slack variables $\varepsilon_{f'}$ and $\varepsilon_{g'}$ in the optimization (non-safety constraints). The optimization returns a control input that achieves the target dynamics of $f_\sigma$' and $g_\sigma$'. Remaining degrees of freedom are used to achieve the weighted goals of using little control input u and achieving the target dynamics of f' and g'.

Exemplary construction of randomController:

The randomController operates in a similar way but the constraints $f_\sigma$' and $g_\sigma$' are replaced by random position constraints on the robot unit's axes.

Exemplary construction of simulateController:

The simulateController simulates the described controller until the constraints of σ' are fulfilled. In this case the resulting state is returned and added to the tree by the planner. In case the optimization problem of equation 4 is infeasible the procedure returns failure and the corresponding state is rejected by the planner. This may happen when the dynamics of safety constraints are in conflict. Controllers may also become stuck locally. To address this the steering functions returns failure after a timeout is reached.

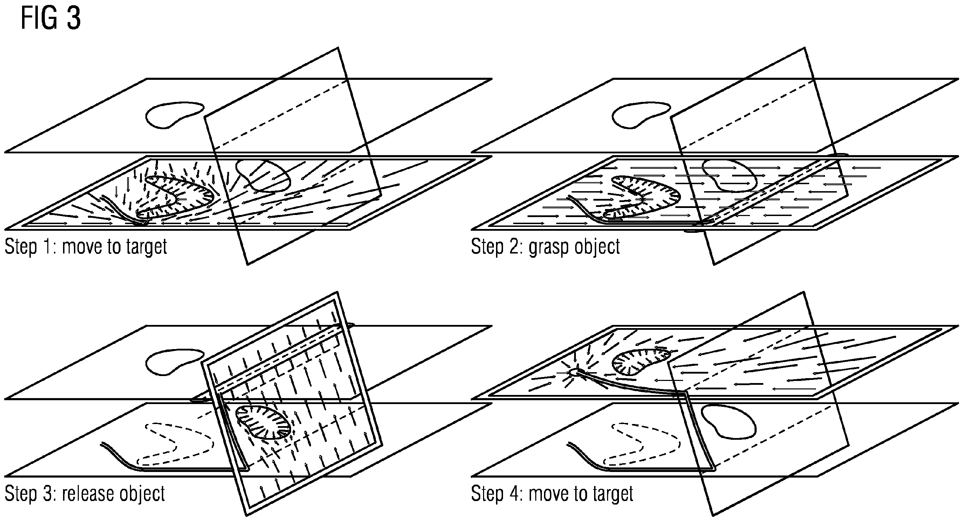

The manipulation planning results in a sequence of constraint-based controllers. Fig. 3 shows the phase-portrait of such a controller sequence for the above pick and place task. In step 1 the goal of the controller is to reach a target axis configuration. This is necessary for step 2, where the goal of the controller is to grasp the object by reaching the intersection of grasp mode and placement mode. If the grasping was attempted first, the system would get stuck in the C-shaped obstacle region. In step 3 the object is placed again at a different placement position. In step 4 the robot unit retracts to a home position.

**Claims**

1. Method for determining a controller sequence, comprising the steps of:

a. Providing a plurality of states with at least one initial state and at least one target state (S1), wherein
b. each state comprises a mode, wherein the mode is a contact-state between at least two elements (10, 20) of a system (1) and is associated with at least one constraint, and
c. determining a respective constraint-based controller for each state of the plurality of states based on the associated mode using manipulation planning (S2), wherein
d. the determined plurality of constraint-based controllers is arranged as sequence of constraint-based controllers, configured to steer the system from the initial state to the target state.

**2.** Method according to claim 1, wherein the at least one constraint is an element selected from the group comprising an axis limit, collision avoidance, velocity limit and distance limit.

**3.** Method according to claim 1 or 2, wherein the state further comprises an additional input element selected from the group comprising a configuration, a time derivative and time.

**4.** Method according to claim 3, wherein
step c. considers one or more additional input elements, at least one previously determined controller and/or another state.

**5.** Method according to any of the preceding claims, wherein the constraint-based controller is random-based or transition-based.

**6.** A computer program product directly loadable into an internal memory of a computer, comprising software code portions for performing the steps according to any one of the preceding claims when said computer program product is running on a computer.

**7.** Technical system for performing the method according to claims 1 - 5.

FIG 1

EP 3 659 757 A1

# FIG 2

σ$_A$: object placed

σ$_B$: object grasped

σ$_C$: object placed

EP 3 659 757 A1

FIG 3

Step 1: move to target

Step 2: grasp object

Step 3: release object

Step 4: move to target

# FIG 4

Europäisches
Patentamt

European
Patent Office

Office européen
des brevets

# EUROPEAN SEARCH REPORT

Application Number

EP 18 20 9481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOODRUFF J ZACHARY ET AL: "Planning and control for dynamic, nonprehensile, and hybrid manipulation tasks", 2017 IEEE INTERNATIONAL CONFERENCE ON ROBOTICS AND AUTOMATION (ICRA), IEEE, 29 May 2017 (2017-05-29), pages 4066-4073, XP033127209, DOI: 10.1109/ICRA.2017.7989467 [retrieved on 2017-07-21] * abstract * * figure 6 * * sections I, III-VI * | 1-7 | INV. B25J9/16 |
| X | SCHMITT PHILIPP S ET AL: "Optimal, sampling-based manipulation planning", 2017 IEEE INTERNATIONAL CONFERENCE ON ROBOTICS AND AUTOMATION (ICRA), IEEE, 29 May 2017 (2017-05-29), pages 3426-3432, XP033127132, DOI: 10.1109/ICRA.2017.7989390 [retrieved on 2017-07-21] * abstract * * figure 1 * * sections III-IV * | 1-7 | |
| A | BRUCE DONALD ET AL: "Kinodynamic motion planning", JOURNAL OF THE ASSOCIATION FOR COMPUTING MACHINERY, ACM, NEW YORK, NY, US, vol. 40, no. 5, 1 November 1993 (1993-11-01), pages 1048-1066, XP058187733, ISSN: 0004-5411, DOI: 10.1145/174147.174150 * abstract * * sections 2 and 3 * | 1-7 | TECHNICAL FIELDS SEARCHED (IPC) B25J G05B |

-/--

The present search report has been drawn up for all claims

| Place of search | Date of completion of the search | Examiner |
|---|---|---|
| The Hague | 27 May 2019 | Hageman, Elodie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 18 20 9481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 325 468 A (TERASAKI HAJIME [JP] ET AL) 28 June 1994 (1994-06-28) <br> * abstract * <br> * figure 1 * <br> * column 5, line 7 - column 17, line 41 * <br> ----- | 1-7 | |
| A | US 2012/010772 A1 (PACK ROBERT TODD [US] ET AL) 12 January 2012 (2012-01-12) <br> * abstract * <br> * figure 16 * <br> * paragraphs [0122] - [0131] * <br> ----- | 1-7 | |

TECHNICAL FIELDS
SEARCHED      (IPC)

The present search report has been drawn up for all claims

| Place of search | Date of completion of the search | Examiner |
|---|---|---|
| The Hague | 27 May 2019 | Hageman, Elodie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 18 20 9481

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2019

| Patent document cited in search report | | Publication date | Patent family member(s) | | Publication date |
|---|---|---|---|---|---|
| US 5325468 | A | 28-06-1994 | US 5325468 A<br>US 5513299 A | | 28-06-1994<br>30-04-1996 |
| US 2012010772 | A1 | 12-01-2012 | US 2012010772 A1<br>US 2014081506 A1 | | 12-01-2012<br>20-03-2014 |

EPO FORM P0459

For more details about this annex : see Official Journal of the European Patent Office, No. 12/82